# EUROPEAN PATENT APPLICATION

(11) **EP 4 319 290 A1**
(43) Date of publication of application: **07.02.2024**
(21) Application number: 22778726.4
(22) Date of filing: 24.03.2022
(51) Int. Cl.: H04W 36/00

(54) **RELAY PROCESSING METHOD AND DEVICE, TERMINAL AND READABLE STORAGE MEDIUM**

(30) Priority: 31.03.2021 CN 202110349425
(71) Applicant: Vivo Mobile Communication Co., Ltd., Dongguan, Guangdong 523863 (CN)
(72) Inventor: LIANG, Jing, Dongguan, Guangdong 523863 (CN); ZHENG, Qian, Dongguan, Guangdong 523863 (CN)
(74) Representative: Winter, Brandl - Partnerschaft mbB
(86) International application number: PCT/CN2022/082730
(87) International publication number: WO 2022/206543

(57) **Abstract**

This application discloses a relay processing method and apparatus, a terminal, and a readable storage medium, and pertains to the field of communications technologies. The method includes: performing, by a first terminal, a first operation based on target content, where the first operation is to trigger relay selection or relay reselection based on at least one of a first measurement result of a reference signal corresponding to a sidelink discovery message and a second measurement result of a reference signal corresponding to sidelink data.

## Description

### CROSS-REFERENCE TO RELATED APPLICATIONS

This application claims priority to Chinese Patent Application No. 202110349425.3, filed on March 31, 2021 in China, which is incorporated herein by reference in its entirety.

### TECHNICAL FIELD

This application pertains to the field of communications technologies, and in particular, relates to a relay processing method and apparatus, a terminal, and a readable storage medium.

### BACKGROUND

In relay selection or relay reselection, measurement on a reference signal of data and measurement on a discovery message can be used to determine to perform relay selection or relay reselection. However, in the prior art, it is unclear to select the measurement on the reference signal of data or the measurement on the discovery message as the basis for selection or reselection of a relay terminal.

### SUMMARY

Embodiments of this application provide a relay processing method and apparatus, a terminal, and a readable storage medium, to solve a prior-art problem that it is unclear to select measurement on a reference signal of data or measurement on a discovery message as the basis for selection or reselection of a relay terminal.

According to a first aspect, a relay processing method is provided, and the method includes: performing, by a first terminal, a first operation based on target content, where the first operation is to trigger relay selection or relay reselection based on at least one of a first measurement result of a reference signal corresponding to a sidelink discovery message and a second measurement result of a reference signal corresponding to sidelink data; and the target content includes at least one of the following: whether a direct communications interface (PC5) connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

According to a second aspect, a relay processing apparatus is provided, where the apparatus is applied to a first terminal, and includes: an execution module, configured to perform a first operation based on target content, where the first operation is to trigger relay selection or relay reselection based on at least one of a first measurement result of a reference signal corresponding to a sidelink discovery message and a second measurement result of a reference signal corresponding to sidelink data; and the target content includes at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

According to a third aspect, a terminal is provided, where the terminal includes a processor, a memory, and a program or an instruction stored in the memory and executable on the processor, where when the program or instruction is executed by the processor, steps of the method according to the first aspect are implemented.

According to a fourth aspect, a terminal is provided, and the terminal includes a processor and a communications interface. The processor is configured to perform a first operation based on target content; the communications interface is used to obtain resources for performing the first operation, where the first operation is to trigger relay selection or relay reselection based on at least one of a first measurement result of a reference signal corresponding to a sidelink discovery message and a second measurement result of a reference signal corresponding to sidelink data; and the target content includes at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

According to a fifth aspect, a readable storage medium is provided, where the readable storage medium stores a program or an instruction, and when the program or the instruction is executed by a processor, steps of the method according to the first aspect or the third aspect are implemented.

According to a sixth aspect, a chip is provided, including a processor and a communications interface. The communications interface is coupled to the processor, and the processor is configured to run a program or an instruction to perform the method according to the first aspect.

According to a seventh aspect, a computer program/program product is provided, where the computer program/program product is stored in a nonvolatile storage medium, and the program/program product is executed by at least one processor to implement steps of the method according to the first aspect.

In the embodiments of this application, based on whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold, at least one of a first measurement result of a reference signal corresponding to a sidelink discovery message and a second measurement result of a reference signal corresponding to sidelink data is used as the basis for triggering relay selection or relay reselection. In other words, the terminal can trigger relay selection or relay reselection under appropriate conditions, so that the terminal can forward a service with a network side device through appropriate relays, thus solving a prior-art problem that it is unclear to select measurement on a reference signal of data or measurement on a discovery message as the basis for selection or reselection of a relay terminal.

### BRIEF DESCRIPTION OF DRAWINGS

FIG. 1 is a block diagram of a wireless communications system to which embodiments of this application can be applied;
FIG. 2 is a schematic diagram of sidelink transmission according to an embodiment of this application;
FIG. 3 is a schematic diagram of a UE-to-network application scenario according to an embodiment of this application;
FIG. 4 is a flowchart of a relay processing method according to an embodiment of this application;
FIG. 5 is a schematic diagram of a structure of a relay processing apparatus according to an embodiment of this application;
FIG. 6 is a schematic diagram of a structure of a communications device according to an embodiment of this application; and
FIG. 7 is a schematic diagram of a structure of a terminal according to an embodiment of this application.

### DESCRIPTION OF EMBODIMENTS

The following clearly describes technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that the technology described in the embodiments of this application is not limited to a long term evolution (Long Time Evolution, LTE)/LTE-advanced (LTE-Advanced, LTE-A) system, and may also be used in various wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communications system.

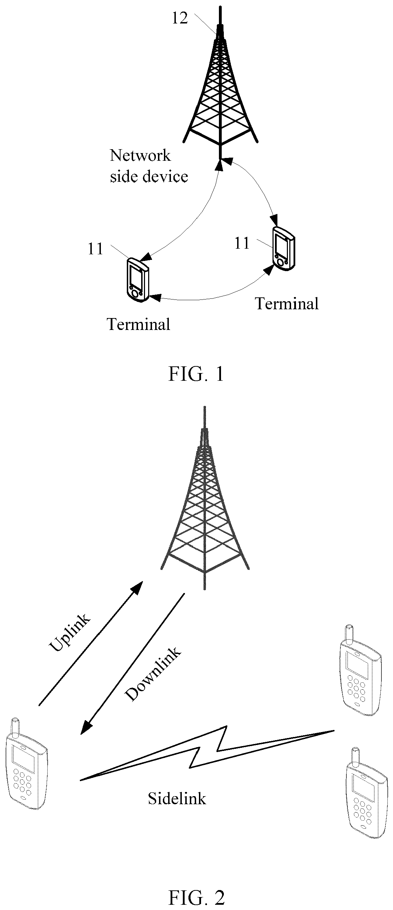

FIG. 1 is a block diagram of a wireless communications system to which embodiments of this application can be applied. The wireless communications system includes a terminal 11 and a network side device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), vehicle user equipment (VUE), or pedestrian user equipment (PUE). The wearable device includes a smartwatch, a bracelet, a headset, glasses, or the like. It should be noted that a specific type of the terminal 11 is not limited in this embodiment of this application. The network side device 12 may be a base station or a core network. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a WiFi node, a transmitting receiving point (Transmitting Receiving Point, TRP), or another suitable term in the field provided that a same technical effect is achieved. The base station is not limited to a specific technical term. It should be noted that, in this application, only a base station in an NR system is used as an example, but a specific type of the base station is not limited.

Related terms in this application are first described.

### 1. Introduction of sidelink (Sidelink)

A long term evolution (Long Term Evolution, LTE) system starts to support sidelink from release 12. As shown in FIG. 2, the sidelink is used for direct data transmission between user equipments (User Equipment, UE) without a network device.

Design of an LTE sidelink is applicable to specific public safety affairs (such as emergency communication at a fire place or a disaster place such as an earthquake) or vehicle to everything (vehicle to everything, V2X) communication. Internet of vehicles communication includes various services, such as basic security type communication, advanced (automatic) driving, formation, and sensor extension. Because the LTE sidelink supports only broadcast communication, the LTE sidelink is mainly used for basic safety communication. Other advanced V2X services with a strict quality of service (Quality of Service, QoS) requirement in terms of delay, reliability, and the like are supported by an NR Sidelink.

The 5G NR system may be used in an operating band above 6 GHz that is not supported by the LTE, and supports a larger operating bandwidth. In addition, a sidelink interface can also be referred to as a PC5 interface.

### 2. Relay (Relay) mechanism

In a relay technology in a radio communications system, one or more relay nodes are added between a base station and a terminal to forward a radio signal one or more times, that is, the radio signal can reach the terminal through a plurality of hops. The radio relay technology can be used not only to extend cell coverage and make up for a blind spot in the cell coverage, but also to improve a cell capacity through spatial resource multiplexing. For indoor coverage, the relay technology can also overcome a penetration loss and improve indoor coverage quality.

A relatively simple two-hop relay is taken as an example, that is, one link of base station-terminal is divided into two links: base station-relay station and relay station-terminal. Thus, there is an opportunity to replace one link with poor quality with two links with better quality for a greater link capacity and better coverage.

Currently, a relay supported in LTE is a UE-to-network relay, that is, one end of the relay is connected to UE and one end is connected to a network side. The UE connected to the relay is referred to as remote UE (remote UE).

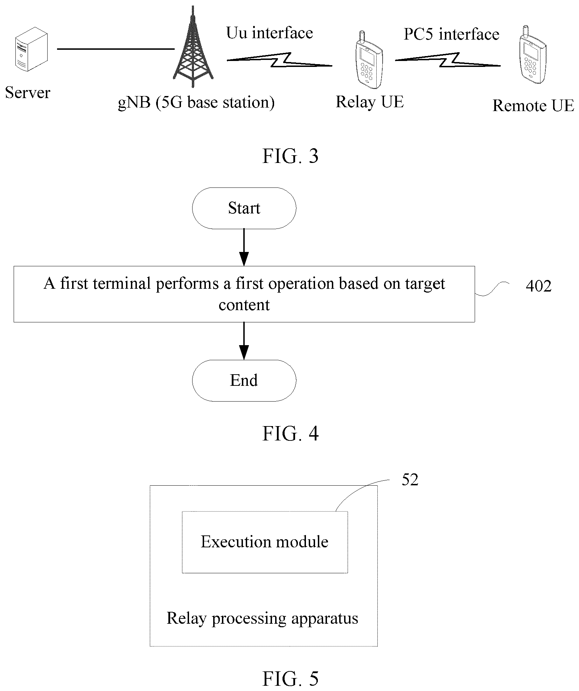

In the existing mechanism, as shown in FIG. 3, there is an application scenario of UE-to-network, the remote UE needs to transmit data to a network side. However, due to poor coverage, relay UE (relay UE) is used for forwarding. There is a cellular network communications interface (Uu interface) between the relay UE and the base station, and there is a sidelink interface between the relay UE and the remote UE. Generally, the relay UE is open and can serve any remote UE.

### 3. Terminal selection and reselection

In LTE, when the remote UE meets a specified condition, relay UE selection or reselection is performed. Currently, selection is mainly determined based on a link between the UE and the base station and signal quality on the sidelink. Currently, relay reselection is mainly triggered when the remote UE determines that a measurement result of sidelink discovery reference signal received power (Sidelink Discovery Reference Signal Received Power, SD-RSRP) is less than a specific threshold, or relay reselection is triggered by an upper layer of the remote UE.

The following describes in detail the relay processing method provided in the embodiments of this application through some embodiments and application scenarios thereof with reference to the accompanying drawings.

As shown in FIG. 4, the relay processing method includes the following steps.

Step 402: A first terminal performs a first operation based on target content.

The first operation is to trigger relay selection or relay reselection based on at least one of a first measurement result of a reference signal corresponding to a sidelink discovery message and a second measurement result of a reference signal corresponding to sidelink data; and
the target content includes at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

It can be learned from step 402 that at least one of the following: whether a PC5 connection has been established between the first terminal and a relay terminal, whether there is data transmission, whether there is an available reference signal corresponding to the sidelink discovery message, whether there is an available reference signal corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold can be used as the basis for triggering relay selection or relay reselection based on a first measurement result of a reference signal corresponding to a sidelink discovery message and a second measurement result of a reference signal corresponding to sidelink data. In other words, the terminal can trigger relay selection or relay reselection under appropriate conditions, so that the terminal can forward a service with a network side device through appropriate relays, thus solving a prior-art problem that it is unclear to select measurement on a reference signal of data or measurement on a discovery message as the basis for selection or reselection of a relay terminal.

It should be noted that the first terminal in this embodiment of this application may be a remote terminal of the relay terminal, and the first measurement result based on the reference signal corresponding to the sidelink discovery message in this embodiment of this application may be a measurement result based on SD-RSRP, while the second measurement result based on the reference signal corresponding to the sidelink data may be a measurement result of sidelink reference signal received power (Sidelink Reference Signal Received Power, SL-RSRP).

In an optional implementation of this embodiment of this application, a manner in which the first terminal performs the first operation based on the target content involved in step 402 may further include one of the following steps.

Step 402-11: In a case that the PC5 connection has been established between the first terminal and the relay terminal, the first terminal triggers the relay selection or the relay reselection based on the second measurement result.

For step 402-11, a specific implementation process of triggering relay selection or relay reselection based on the second measurement result may be performing relay selection when the second measurement result is greater than or equal to a first preset value, and performing relay reselection when the second measurement result is less than or equal to the first preset value.

Step 402-12: In a case that the PC5 connection has been established between the first terminal and the relay terminal, the first terminal triggers relay selection or relay reselection based on the first measurement result and the second measurement result.

For step 402-11, a specific implementation process in which the first terminal triggers relay selection or relay reselection based on the first measurement result and the second measurement result may be as follows.
1) At least one of the first measurement result and the second measurement result meets a threshold condition, for example, in a first case, the first measurement result or the second measurement result is greater than or equal to the second preset threshold; and in a second case, the first measurement result is greater than or equal to a third preset threshold, or the second measurement result is greater than or equal to the third preset threshold, or both the first measurement result and the second measurement result are greater than or equal to the third preset threshold.
2) Both the first measurement result and the second measurement result meet the threshold condition, for example, both the first measurement result and the second measurement result are greater than or equal to the second preset threshold, the first measurement result is greater than or equal to the third preset threshold, and the second measurement result is greater than or equal to the third preset threshold.

It should be noted that relay selection or relay reselection is triggered based on the first measurement result and the second measurement result, and relay selection is performed when the first measurement result or the second measurement result is greater than or equal to the second preset value, and relay reselection is performed when the first measurement result or the second measurement result is less than or equal to the second preset value. A same processing mode is applied to the third preset threshold.

The PC5 connection involved in this embodiment of this application may be a PC5-S connection, a PC5-RRC (Radio Resource Control) connection, or the like.

In an optional implementation of this embodiment of this application, in a case that the PC5 connection has been established between the first terminal and the relay terminal, and there is no service data transmission, the method in this embodiment of this application may further include one of the following steps.

Step 404: The first terminal stops evaluation for the relay selection or the relay reselection.

Step 406: The first terminal receives a data packet sent by the relay terminal, where the data packet is used for the first terminal to measure the reference signal corresponding to the sidelink data.

In another optional implementation of this embodiment of this application, a manner in which the first terminal performs the first operation based on the target content involved in step 402 may further include at least one of the following steps.

Step 402-21: When there is data transmission, the first terminal triggers the relay selection or the relay reselection based on the second measurement result.

Step 402-22: When there is data transmission, the first terminal triggers the relay selection or the relay reselection based on the first measurement result and the second measurement result.

Step 402-23: When there is no data transmission, the first terminal triggers the relay selection or the relay reselection based on the first measurement result.

It can be seen from steps 402-21 to 402-23 that relay selection or relay reselection can be triggered based on the first measurement result or the second measurement result with or without data. In a specific application scenario, it is preferable that the first terminal triggers relay selection when the first measurement result or the second measurement result is greater than or equal to the fourth preset value; and when the first measurement result or the second measurement result is less than or equal to a fifth preset value, the first terminal triggers relay reselection. That is, the first terminal can trigger relay selection or relay reselection under an appropriate condition, so that the first terminal and the network side device can communicate through appropriate relay.

Based on step 402-21 and step 402-23, methods for transmitting the discovery message in this embodiment of this application include one of the following: periodically transmitting the discovery message between the first terminal and the relay terminal; and transmitting the discovery message only when there is no data.

In another optional implementation of this embodiment of this application, a manner in which the first terminal performs the first operation based on the target content involved in step 402 may further include at least one of the following steps.

Step 402-31: When there is an available reference signal corresponding to the sidelink data, the first terminal triggers the relay selection or the relay reselection based on the second measurement result.

Step 402-32: When there is no available reference signal corresponding to the sidelink data, the first terminal triggers the relay selection or the relay reselection based on the first measurement result.

It can be seen from step 402-31 to step 402-32 that based on whether there is an available reference signal corresponding to sidelink data, relay selection or relay reselection can further be triggered based on the first measurement result and the second measurement result, relay selection is performed when the first measurement result or the second measurement result is greater than or equal to a sixth preset value, and relay reselection is performed when the first measurement result or the second measurement result is less than or equal to the sixth preset value. A same processing mode is applied to a seventh preset threshold. That is, the first terminal can trigger relay selection or relay reselection under an appropriate condition, so that the first terminal and the network side device can communicate through appropriate relay.

For step 402-31 to step 402-32, methods for transmitting the discovery message in this embodiment of this application include one of the following: 1) periodically transmitting the discovery message between the first terminal and the relay terminal; and 2) transmitting the discovery message when there is no available reference signal corresponding to the sidelink data.

In another optional implementation of this embodiment of this application, a manner in which the first terminal performs the first operation based on the target content involved in step 402 may further include at least one of the following steps.

Step 402-41: When there is an available reference signal corresponding to the sidelink discovery message, the first terminal triggers the relay selection or the relay reselection based on the first measurement result.

Step 402-42: When there is no available reference signal corresponding to the sidelink discovery message, the first terminal triggers the relay selection or the relay reselection based on the second measurement result.

It can be seen from step 402-41 to step 402-42 that based on whether there is an available reference signal corresponding to the sidelink discovery message, relay selection or relay reselection can further be triggered based on the first measurement result and the second measurement result, relay selection is performed when the first measurement result or the second measurement result is greater than or equal to an eighth preset value, and relay reselection is performed when the first measurement result or the second measurement result is less than or equal to the eighth preset value. A same processing mode is applied to a ninth preset threshold. That is, the first terminal can trigger relay selection or relay reselection under an appropriate condition, so that the first terminal and the network side device can communicate through appropriate relay.

In another optional implementation of this embodiment of this application, a manner in which the first terminal performs the first operation based on the target content involved in step 402 may further include following steps.

Step 402-51: When the discovery message is received, the first terminal triggers the relay selection or the relay reselection based on the first measurement result.

Step 402-52: When the discovery message is not received, the first terminal triggers the relay selection or the relay reselection based on the second measurement result.

It can be seen that in this application, a corresponding measurement result can further be used to trigger relay selection or relay reselection based on whether the discovery message is received, and specifically, whether to perform relay selection or relay reselection is similar to other methods for triggering relay selection or relay reselection mentioned above.

It should be noted that in an optional implementation of this embodiment of this application, when the reference signal corresponding to the discovery message and the reference signal corresponding to the data have not been received, the first terminal stops evaluation for the relay selection or the relay reselection.

In another optional implementation of this embodiment of this application, the first indication information in this embodiment of this application is used to indicate one of the following: triggering relay selection or relay reselection based on the first measurement result, or triggering relay selection or relay reselection based on the second measurement result; and triggering relay selection or relay reselection based on the first measurement result, or triggering relay selection or relay reselection based on the second measurement result and the first measurement result.

It can be seen that in this embodiment of this application, the first terminal can determine, based on the received first indication information, whether to trigger relay selection or relay reselection based on the second measurement result or the first measurement result, or based on the second measurement result and the first measurement result. The first indication information sent by the network side device is in a correspondence with at least one of the following: a pair of source ID and destination ID, a destination ID, a unicast link ID, a terminal, a service type, and a group ID in multicast.

For example, when there is a correspondence between the first indication information and the pair of source ID and destination ID, it indicates that the first indication information is used to indicate the pair of IDs. To be specific, whether the pair of source ID and destination ID needs to be used to trigger relay selection or relay reselection based on the second measurement result or the first measurement result, or based on the second measurement result and the first measurement result. A similar processing manner is used for other IDs or service types.

In another optional implementation of this embodiment of this application, the second indication information in this embodiment of this application is used to indicate one of the following: triggering relay selection or relay reselection based on the first measurement result, or triggering relay selection or relay reselection based on the second measurement result; and triggering relay selection or relay reselection based on the first measurement result, or triggering relay selection or relay reselection based on the first measurement result and the second measurement result.

It can be seen that the second indication information sent by the peer terminal can also be used to directly indicate whether to trigger relay selection or relay reselection based on the second measurement result or the first measurement result, or based on the second measurement result and the first measurement result.

In another optional implementation of this embodiment of this application, that the first terminal performs the first operation based on the target content involved in step 402 includes one of the following steps.

Step 402-61: When the first measurement result is greater than or equal to the first preset threshold, and the second measurement result is less than the second preset threshold, the first terminal triggers the relay selection or the relay reselection based on the first measurement result.

Step 402-62: When the first measurement result is less than the first preset threshold, and the second measurement result is greater than or equal to the second preset threshold, the first terminal triggers the relay selection or the relay reselection based on the second measurement result.

Step 402-63: When the first measurement result is greater than or equal to the first preset threshold, and the second measurement result is greater than or equal to the second preset threshold, the first terminal triggers the relay selection or the relay reselection.

It can be seen from step 402-61 to step 402-63 that relay selection or relay reselection can be triggered based on a measurement result of being greater than or equal to the threshold. It should be noted that step 402-61 to step 402-63 are in parallel, and only one of them needs to meet the condition, that is, after the measurement result is compared with the threshold, relay selection or relay reselection is triggered when the measurement result is greater than or equal to or less than the threshold.

In another optional implementation of this embodiment of this application, that the first terminal performs the first operation based on the target content involved in step 402 includes at least one of the following steps.

Step 402-71: When the first measurement result is greater than or equal to the second measurement result, the first terminal triggers the relay selection or the relay reselection based on the second measurement result.

Step 402-72: When the first measurement result is less than the second measurement result, the first terminal triggers the relay selection or the relay reselection based on the first measurement result.

Step 402-73: When the first measurement result is less than or equal to the second measurement result, the first terminal triggers the relay selection or the relay reselection based on the second measurement result.

Step 402-74: When the first measurement result is greater than the second measurement result, the first terminal triggers the relay selection or the relay reselection based on the first measurement result.

It can be seen from step 402-71 to step 402-74 that relay selection or relay reselection can be triggered based on a comparison result between the first measurement result and the second measurement result. It should be noted that step 402-71 to step 402-74 are in parallel, and only one of them needs to meet the condition, that is, after the measurement results are compared, relay selection or relay reselection is triggered when the first measurement result is greater than or equal to or less than the second measurement result. To be specific, relay selection or relay reselection is triggered when the first measurement result is greater than or equal to or less than the second measurement result.

In another optional implementation of this embodiment of this application, that the first terminal performs the first operation based on the target content involved in step 402 includes one of the following steps.

Step 402-81: When at least one of the first measurement result and the second measurement result is greater than or equal to a third preset threshold, the first terminal triggers the relay selection or the relay reselection.

Step 402-82: When both the first measurement result and the second measurement result are greater than or equal to a fourth preset threshold, the first terminal triggers the relay selection or the relay reselection.

The third preset threshold in step 402-81 and the third preset threshold in step 402-82 may be two thresholds, that is, when the third preset threshold includes two thresholds, the first measurement result is compared with the third preset threshold, and the second measurement result is compared with the third preset threshold, and then the first measurement result and the second measurement result are compared with another preset threshold.

In another optional implementation of this embodiment of this application, that the first terminal performs the first operation based on the target content involved in step 402 includes one of the following steps.

Step 402-91: When at least one of the first measurement result and the second measurement result is less than or equal to a fifth preset threshold, the first terminal triggers the relay selection or the relay reselection.

Step 402-92: When both the first measurement result and the second measurement result are less than or equal to a sixth preset threshold, the first terminal triggers the relay selection or the relay reselection.

The fifth preset threshold in step 402-91 and the fifth preset threshold in step 402-92 may be two thresholds, that is, when the fifth preset threshold includes two thresholds, the first measurement result is compared with the fifth preset threshold, and the second measurement result is compared with the fifth preset threshold, and then the first measurement result and the second measurement result are compared with another preset threshold.

The following describes the method for triggering relay selection or relay reselection in this application by taking an example in which the first measurement result based on the reference signal corresponding to the sidelink discovery message may be a measurement result based on SD-RSRP and the second measurement result based on the reference signal corresponding to the sidelink data may be a measurement result of SL-RSRP.

### Optional implementation 1:

If SL-RSRP is used in relay selection, the method in this optional implementation includes the following steps.

Step 501: A unicast link has been established between remote UE and relay UE to perform a non-relay-related service.

Step 502: The remote UE decides to select a relay for the subsequent service based on judgment criteria, and when an appropriate relay is evaluated, it is measured that at least one of SL-RSRP and SD-RSRP of the relay UE meets the threshold condition, then the relay UE1 is selected by the remote UE as the appropriate relay.

At least one of SL-RSRP and SD-RSRP meets the threshold condition, which may refer to: SD-RSRP>=TH1 or SL-RSRP>=TH2, where TH1 is a first threshold, and TH2 is a second threshold.

Step 503: The remote UE performs subsequent communication with the base station based on relay UE forwarding.

### Optional implementation 2:

When SL-RSRP+SD-RSRP is used in relay reselection, the method in this optional implementation includes the following steps.

Step 601: The remote UE decides to select a relay for service communication with the base station based on judgment criteria.

Step 602: The remote UE selects an appropriate relay UE based on SD-RSRP and establishes a unicast link with the relay UE.

Step 603: When the remote UE receives data of the relay UE, SL-RSRP is measured, and the remote UE can also receive a discovery message of the relay UE to measure SD-RSRP.

Step 604: When both SD-RSRP and SL-RSRP do not meet the threshold condition, the remote UE triggers a relay reselection process.

When the relay UE is reselected, the remote UE only uses SD-RSRP to determine whether new candidate relay UE can be selected, or uses SD-RSRP+SL-RSRP to determine whether the new candidate relay UE can be selected.

It should be noted that an execution subject of the relay processing method according to an embodiment of this application may be a relay processing apparatus, or a control module for performing the relay processing method in the relay processing apparatus. In the embodiments of this application, the relay processing apparatus according to an embodiment of this application is described by using an example in which the relay processing apparatus performs the relay processing method.

As shown in FIG. 5, an embodiment of this application further provides a relay processing apparatus, the apparatus is applied to a first terminal, and the apparatus includes:
an execution module 52, configured to perform a first operation based on target content, where
the first operation is to trigger relay selection or relay reselection based on at least one of a first measurement result of a reference signal corresponding to a sidelink discovery message and a second measurement result of a reference signal corresponding to sidelink data; and
the target content includes at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

According to the apparatus in this embodiment of this application, at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold can be used as the basis for triggering relay selection or relay reselection based on a first measurement result of a reference signal corresponding to a sidelink discovery message and a second measurement result of a reference signal corresponding to sidelink data. In other words, the terminal can trigger relay selection or relay reselection under appropriate conditions, so that the terminal can forward a service with a network side device through appropriate relays, thus solving a prior-art problem that it is unclear to select measurement on a reference signal of data or measurement on a discovery message as the basis for selection or reselection of a relay terminal.

Optionally, the execution module 52 in this embodiment of this application may further include one of the following:
a first trigger unit, configured to: in a case that the PC5 connection has been established between the first terminal and the relay terminal, trigger the relay selection or the relay reselection based on the second measurement result; and
a second trigger unit, configured to: in a case that the PC5 connection has been established between the first terminal and the relay terminal, trigger the relay selection or the relay reselection based on the first measurement result and the second measurement result.

Optionally, in a case that the PC5 connection has been established between the first terminal and the relay terminal, and there is no service data transmission, the apparatus in this embodiment of this application may further include one of the following:
a first stopping module, configured to stop evaluation for the relay selection or the relay reselection; and
a receiving module, configured to receive a data packet sent by the relay terminal, where the data packet is used for the first terminal to measure the reference signal corresponding to the sidelink data.

Optionally, the execution module 52 in this embodiment of this application may further include one of the following:
a third trigger unit, configured to: when there is data transmission, trigger the relay selection or the relay reselection based on the second measurement result;
a fourth trigger unit, configured to: when there is data transmission, trigger the relay selection or the relay reselection based on the first measurement result and the second measurement result; and
a fifth trigger unit, configured to: when there is no data transmission, trigger the relay selection or the relay reselection based on the first measurement result.

Optionally, methods for transmitting the discovery message in this embodiment of this application include one of the following: periodically transmitting the discovery message between the first terminal and the relay terminal; and transmitting the discovery message only when there is no data.

Optionally, the execution module 52 in this embodiment of this application may further include: a sixth trigger unit, configured to: when there is an available reference signal corresponding to the sidelink data, trigger the relay selection or the relay reselection based on the second measurement result; and a seventh trigger unit, configured to: when there is no available reference signal corresponding to the sidelink data, trigger the relay selection or the relay reselection based on the first measurement result.

Optionally, methods for transmitting the discovery message in this embodiment of this application include one of the following: periodically transmitting the discovery message between the first terminal and the relay terminal; and transmitting the discovery message when there is no available reference signal corresponding to the sidelink data.

Optionally, the execution module 52 in this embodiment of this application may further include: an eighth trigger unit, configured to: when there is an available reference signal corresponding to the sidelink discovery message, trigger the relay selection or the relay reselection based on the first measurement result; and a ninth trigger unit, configured to: when there is no available reference signal corresponding to the sidelink discovery message, trigger the relay selection or the relay reselection based on the second measurement result.

Optionally, the execution module 52 in this embodiment of this application may further include: when the discovery message is received, triggering, by the first terminal, the relay selection or the relay reselection based on the first measurement result; and when the discovery message is not received, triggering, by the first terminal, the relay selection or the relay reselection based on the second measurement result.

Optionally, the apparatus in this embodiment of this application may further include: a second stopping module, configured to: when the reference signal corresponding to the discovery message and the reference signal corresponding to the data have not been received, stop evaluation for the relay selection or the relay reselection.

Optionally, the first indication information in this embodiment of this application is used to indicate one of the following:
1) triggering the relay selection or the relay reselection based on the first measurement result, or triggering the relay selection or the relay reselection based on the second measurement result; and
2) triggering the relay selection or the relay reselection based on the first measurement result, or triggering the relay selection or the relay reselection based on the second measurement result and the first measurement result.

Optionally, the first indication information in this embodiment of this application is in a correspondence with at least one of the following: a pair of source ID and destination ID, a destination ID, a unicast link ID, a terminal, a service type, and a group ID in multicast.

Optionally, the second indication information in this embodiment of this application is used to indicate one of the following:
1) triggering the relay selection or the relay reselection based on the first measurement result, or triggering the relay selection or the relay reselection based on the second measurement result; and
2) triggering the relay selection or the relay reselection based on the first measurement result, or triggering the relay selection or the relay reselection based on the first measurement result and the second measurement result.

Optionally, the execution module 52 in this embodiment of this application may further include one of the following:
a tenth trigger unit, configured to: when the first measurement result is greater than or equal to the first preset threshold, and the second measurement result is less than the second preset threshold, trigger the relay selection or the relay reselection based on the first measurement result;
an eleventh trigger unit, configured to: when the first measurement result is less than the first preset threshold, and the second measurement result is greater than or equal to the second preset threshold, trigger the relay selection or the relay reselection based on the second measurement result; and
a twelfth trigger unit, configured to: when the first measurement result is greater than or equal to the first preset threshold, and the second measurement result is greater than or equal to the second preset threshold, trigger the relay selection or the relay reselection.

Optionally, the execution module 52 in this embodiment of this application may further include one of the following:
a thirteenth trigger unit, configured to: when the first measurement result is greater than or equal to the second measurement result, trigger the relay selection or the relay reselection based on the second measurement result;
a fourteenth trigger unit, configured to: when the first measurement result is less than the second measurement result, trigger the relay selection or the relay reselection based on the first measurement result;
a fifteenth trigger unit, configured to: when the first measurement result is less than or equal to the second measurement result, trigger the relay selection or the relay reselection based on the second measurement result; and
a sixteenth trigger unit, configured to: when the first measurement result is greater than the second measurement result, trigger the relay selection or the relay reselection based on the first measurement result.

Optionally, the execution module 52 in this embodiment of this application may further include one of the following:
a seventeenth trigger unit, configured to: when at least one of the first measurement result and the second measurement result is greater than or equal to a third preset threshold, trigger the relay selection or the relay reselection; and
an eighteenth trigger unit, configured to: when both the first measurement result and the second measurement result are greater than or equal to a fourth preset threshold, trigger the relay selection or the relay reselection.

Optionally, the execution module 52 in this embodiment of this application may further include one of the following:
a nineteenth trigger unit, configured to: when at least one of the first measurement result and the second measurement result is less than or equal to a fifth preset threshold, trigger the relay selection or the relay reselection; and
a twentieth trigger unit, configured to: when both the first measurement result and the second measurement result are less than or equal to a sixth preset threshold, trigger the relay selection or the relay reselection.

The relay processing apparatus in this embodiment of this application may be an apparatus or an apparatus or electronic device with an operating system, or may be a component, an integrated circuit, or a chip in a terminal. The apparatus or electronic device may be a mobile terminal, or a non-mobile terminal. For example, the mobile terminal may include, but is not limited to the type of the terminal 11 listed above. The non-mobile terminal may be a server, a network attached storage (Network Attached Storage, NAS) device, a personal computer (personal computer, PC), a television (television, TV), a teller machine, a self-service machine, or the like. This is not specifically limited in the embodiments of this application.

The relay processing apparatus provided in this embodiment of this application can implement the processes implemented in the method embodiment in FIG. 4, and achieve a same technical effect. To avoid repetition, details are not provided herein again.

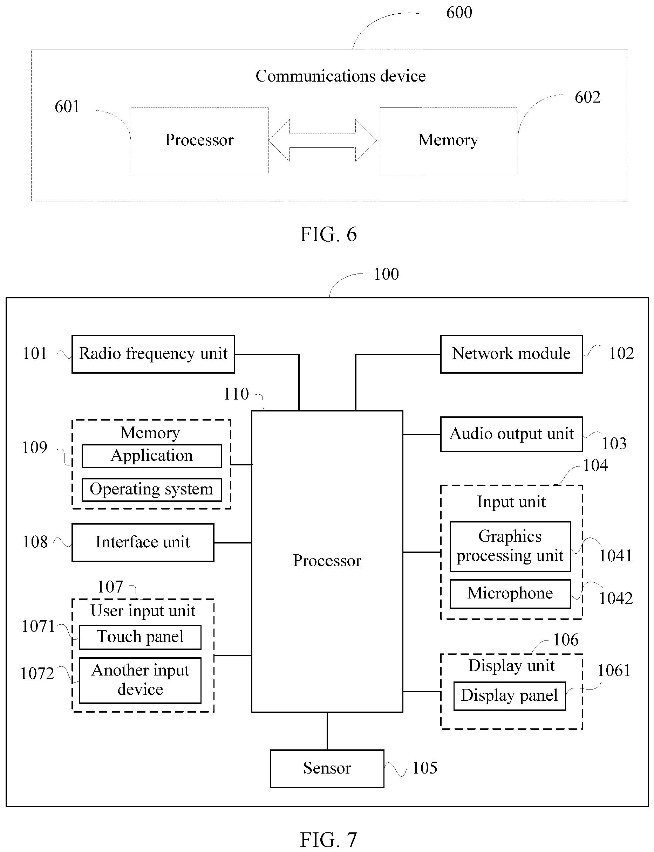

Optionally, as shown in FIG. 6, an embodiment of this application further provides a communications device 600, including a processor 601, a memory 602, a program or an instruction stored in the memory 602 and executable on the processor 601. For example, when the communications device 600 is a terminal, the program or the instruction is executed by the processor 601 to implement the processes of the foregoing relay processing method embodiment, and a same technical effect can be achieved. When the communications device 600 is a network side device, and the program or the instruction is executed by a processor 601, the processes in the foregoing relay processing method embodiment are implemented, and a same technical effect can be achieved. To avoid repetition, details are not described herein again.

An embodiment of this application further provides a terminal, including a processor and a communications interface, where the processor is used to perform the first operation based on the target content, and the communications interface is used to obtain resources for performing the first operation. The first operation is to trigger relay selection or relay reselection based on at least one of a first measurement result of a reference signal corresponding to a sidelink discovery message and a second measurement result of a reference signal corresponding to sidelink data; and
the target content includes at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

The terminal embodiment is corresponding to the terminal side method embodiment, each implementation process and implementation of the method embodiment can be applied to the terminal embodiment, and a same technical effect can be achieved. Specifically, FIG. 7 is a schematic diagram of a hardware structure of a terminal according to an embodiment of this application.

A terminal 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the terminal 100 may further include a power supply (such as a battery) that supplies power to each component. The power supply may be logically connected to the processor 110 by using a power supply management system, to implement functions such as charging and discharging management, and power consumption management by using the power supply management system. The terminal structure shown in FIG. 7 constitutes no limitation on the terminal, and the terminal may include more or fewer components than those shown in FIG. 7, or combine some components, or have different component arrangements. Details are not described herein.

It should be understood that, in this embodiment of this application, the input unit 104 may include a graphics processing unit (Graphics Processing Unit, GPU) 1041 and a microphone 1042, and the graphics processing unit 1041 processes image data of a still picture or a video obtained by an image capture apparatus (for example, a camera) in a video capture mode or an image capture mode. The display unit 106 may include a display panel 1061. Optionally, the display panel 1061 may be configured in a form such as a liquid crystal display or an organic light-emitting diode. The user input unit 107 includes a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, the radio frequency unit 101 receives downlink data from a network side device and then sends the downlink data to the processor 110 for processing; and sends uplink data to the network side device. Usually, the radio frequency unit 101 includes but is not limited to an antenna, at least one amplifier, a transceiver, a coupler, a low noise amplifier, a duplexer, and the like.

The memory 109 may be configured to store a software program or an instruction and various data. The memory 109 may mainly include a program or instruction storage area and a data storage area. The program or instruction storage area may store an operating system, and an application or an instruction required by at least one function (for example, a sound playing function or an image playing function). In addition, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 110 may include one or more processing units. Optionally, an application processor and a modem processor may be integrated into the processor 110. The application processor mainly processes an operating system, a user interface, an application, an instruction, or the like. The modem processor mainly processes wireless communications, for example, a baseband processor. It can be understood that, alternatively, the modem processor may not be integrated into the processor 110.

The processor 110 is configured to perform a first operation based on target content, where
the first operation is to trigger relay selection or relay reselection based on at least one of a first measurement result of a reference signal corresponding to a sidelink discovery message and a second measurement result of a reference signal corresponding to sidelink data; and
the target content includes at least one of the following: whether a PC5 connection has been established between the first terminal and a relay terminal, whether there is data transmission, whether there is an available reference signal corresponding to the sidelink discovery message, whether there is an available reference signal corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

Optionally, the processor 110 is further configured to perform one of the following:
in a case that the PC5 connection has been established between the first terminal and the relay terminal, triggering the relay selection or the relay reselection based on the second measurement result; and
in a case that the PC5 connection has been established between the first terminal and the relay terminal, triggering the relay selection or the relay reselection based on the first measurement result and the second measurement result.

Optionally, the processor 110 is further configured to: in a case that the PC5 connection has been established between the first terminal and the relay terminal, and there is no service data transmission, perform one of the following:
stopping, by the first terminal, evaluation for the relay selection or the relay reselection; and
receiving, by the first terminal, a data packet sent by the relay terminal, where the data packet is used for the first terminal to measure the reference signal corresponding to the sidelink data.

Optionally, the processor 110 is further configured to perform one of the following:
when there is data transmission, triggering, by the first terminal, the relay selection or the relay reselection based on the second measurement result;
when there is data transmission, triggering, by the first terminal, the relay selection or the relay reselection based on the first measurement result and the second measurement result; and
when there is no data transmission, triggering, by the first terminal, the relay selection or the relay reselection based on the first measurement result.

Optionally, the processor 110 is further configured to perform one of the following:
when there is an available reference signal corresponding to the sidelink data, triggering, by the first terminal, the relay selection or the relay reselection based on the second measurement result; and
when there is no available reference signal corresponding to the sidelink data, triggering, by the first terminal, the relay selection or the relay reselection based on the first measurement result.

Optionally, the processor 110 is further configured to perform one of the following:
when there is an available reference signal corresponding to the sidelink discovery message, triggering, by the first terminal, the relay selection or the relay reselection based on the first measurement result; and
when there is no available reference signal corresponding to the sidelink discovery message, triggering, by the first terminal, the relay selection or the relay reselection based on the second measurement result.

Optionally, the processor 110 is further configured to perform one of the following:
when the discovery message is received, triggering, by the first terminal, the relay selection or the relay reselection based on the first measurement result; and
when the discovery message is not received, triggering, by the first terminal, the relay selection or the relay reselection based on the second measurement result.

Optionally, the processor 110 is further configured to perform one of the following:
when the first measurement result is greater than or equal to the first preset threshold, and the second measurement result is less than the second preset threshold, triggering, by the first terminal, the relay selection or the relay reselection based on the first measurement result;
when the first measurement result is less than the first preset threshold, and the second measurement result is greater than or equal to the second preset threshold, triggering, by the first terminal, the relay selection or the relay reselection based on the second measurement result; and
when the first measurement result is greater than or equal to the first preset threshold, and the second measurement result is greater than or equal to the second preset threshold, triggering, by the first terminal, the relay selection or the relay reselection.

Optionally, the processor 110 is further configured to perform one of the following:
when the first measurement result is greater than or equal to the second measurement result, triggering, by the first terminal, the relay selection or the relay reselection based on the second measurement result;
when the first measurement result is less than the second measurement result, triggering, by the first terminal, the relay selection or the relay reselection based on the first measurement result;
when the first measurement result is less than or equal to the second measurement result, triggering, by the first terminal, the relay selection or the relay reselection based on the second measurement result; and
when the first measurement result is greater than the second measurement result, triggering, by the first terminal, the relay selection or the relay reselection based on the first measurement result.

Optionally, the processor 110 is further configured to perform one of the following:
when at least one of the first measurement result and the second measurement result is greater than or equal to a third preset threshold, triggering, by the first terminal, the relay selection or the relay reselection; and
when both the first measurement result and the second measurement result are greater than or equal to a fourth preset threshold, triggering, by the first terminal, the relay selection or the relay reselection.

Optionally, the processor 110 is further configured to perform one of the following:
when at least one of the first measurement result and the second measurement result is less than or equal to a fifth preset threshold, triggering, by the first terminal, the relay selection or the relay reselection; and
when both the first measurement result and the second measurement result are less than or equal to a sixth preset threshold, triggering, by the first terminal, the relay selection or the relay reselection.

An embodiment of this application further provides a readable storage medium. The readable storage medium stores a program or an instruction, and the program or the instruction is executed by a processor to implement the processes of the foregoing relay processing method embodiment, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing relay processing method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a computer program product, the computer program product is stored in a non-volatile storage medium, and the computer program product is executed by at least one processor to implement the processes of the foregoing relay processing method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the implementations of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air-conditioner, a network device, or the like) to perform the method described in the embodiments of this application.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. A relay processing method, comprising:
performing, by a first terminal, a first operation based on target content, wherein
the first operation is to trigger relay selection or relay reselection based on at least one of a first measurement result of a reference signal corresponding to a sidelink discovery message and a second measurement result of a reference signal corresponding to sidelink data; and
the target content comprises at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

2. The method according to claim 1, wherein the performing, by a first terminal, a first operation based on target content comprises one of the following:
in a case that the PC5 connection has been established between the first terminal and the relay terminal, triggering, by the first terminal, the relay selection or the relay reselection based on the second measurement result; and
in a case that the PC5 connection has been established between the first terminal and the relay terminal, triggering, by the first terminal, the relay selection or the relay reselection based on the first measurement result and the second measurement result.

3. The method according to claim 2, wherein in a case that the PC5 connection has been established between the first terminal and the relay terminal, and there is no service data transmission, the method comprises one of the following:
stopping, by the first terminal, evaluation for the relay selection or the relay reselection; and
receiving, by the first terminal, a data packet sent by the relay terminal, wherein the data packet is used for the first terminal to measure the reference signal corresponding to the sidelink data.

4. The method according to claim 1, wherein the performing, by a first terminal, a first operation based on target content comprises at least one of the following:
when there is data transmission, triggering, by the first terminal, the relay selection or the relay reselection based on the second measurement result;
when there is data transmission, triggering, by the first terminal, the relay selection or the relay reselection based on the first measurement result and the second measurement result; and
when there is no data transmission, triggering, by the first terminal, the relay selection or the relay reselection based on the first measurement result.

5. The method according to claim 4, wherein the discovery message is able to be transmitted in any one of following manners:
transmitting the discovery message between the first terminal and the relay terminal periodically; and
transmitting the discovery message only if there is no data.

6. The method according to claim 1, wherein the performing, by a first terminal, a first operation based on target content comprises:
when there is an available reference signal corresponding to the sidelink data, triggering, by the first terminal, the relay selection or the relay reselection based on the second measurement result; and
when there is no available reference signal corresponding to the sidelink data, triggering, by the first terminal, the relay selection or the relay reselection based on the first measurement result.

7. The method according to claim 6, wherein the discovery message is able to be transmitted in any one of following manners:
transmitting the discovery message between the first terminal and the relay terminal periodically; and
when there is no available reference signal corresponding to the sidelink data, transmitting the discovery message.

8. The method according to claim 1, wherein the performing, by a first terminal, a first operation based on target content comprises:
when there is an available reference signal corresponding to the sidelink discovery message, triggering, by the first terminal, the relay selection or the relay reselection based on the first measurement result; and
when there is no available reference signal corresponding to the sidelink discovery message, triggering, by the first terminal, the relay selection or the relay reselection based on the second measurement result.

9. The method according to claim 1, wherein the performing, by a first terminal, a first operation based on target content comprises:
when the discovery message is received, triggering, by the first terminal, the relay selection or the relay reselection based on the first measurement result; and
when the discovery message is not received, triggering, by the first terminal, the relay selection or the relay reselection based on the second measurement result.

10. The method according to claim 9, wherein the method further comprises:
when the reference signal corresponding to the discovery message and the reference signal corresponding to the data have not been received, stopping, by the first terminal, evaluation for the relay selection or the relay reselection.

11. The method according to claim 1, wherein the first indication information is used to indicate one of the following:
triggering the relay selection or the relay reselection based on the first measurement result, or triggering the relay selection or the relay reselection based on the second measurement result; and
triggering the relay selection or the relay reselection based on the first measurement result, or triggering the relay selection or the relay reselection based on the second measurement result and the first measurement result.

12. The method according to claim 1, wherein the first indication information is in a correspondence with at least one of the following:
a pair of source ID and destination ID, a destination ID, a unicast link ID, a terminal, a service type, and a group ID in multicast.

13. The method according to claim 1, wherein the second indication information is used to indicate one of the following:
triggering the relay selection or the relay reselection based on the first measurement result, or triggering the relay selection or the relay reselection based on the second measurement result; and
triggering the relay selection or the relay reselection based on the first measurement result, or triggering the relay selection or the relay reselection based on the first measurement result and the second measurement result.

14. The method according to claim 1, wherein the performing, by a first terminal, a first operation based on target content comprises one of the following:
when the first measurement result is greater than or equal to the first preset threshold, and the second measurement result is less than the second preset threshold, triggering, by the first terminal, the relay selection or the relay reselection based on the first measurement result;
when the first measurement result is less than the first preset threshold, and the second measurement result is greater than or equal to the second preset threshold, triggering, by the first terminal, the relay selection or the relay reselection based on the second measurement result; and
when the first measurement result is greater than or equal to the first preset threshold, and the second measurement result is greater than or equal to the second preset threshold, triggering, by the first terminal, the relay selection or the relay reselection.

15. The method according to claim 1, wherein the performing, by a first terminal, a first operation based on target content comprises at least one of the following:
when the first measurement result is greater than or equal to the second measurement result, triggering, by the first terminal, the relay selection or the relay reselection based on the second measurement result;
when the first measurement result is less than the second measurement result, triggering, by the first terminal, the relay selection or the relay reselection based on the first measurement result;
when the first measurement result is less than or equal to the second measurement result, triggering, by the first terminal, the relay selection or the relay reselection based on the second measurement result; and
when the first measurement result is greater than the second measurement result, triggering, by the first terminal, the relay selection or the relay reselection based on the first measurement result.

16. The method according to claim 1, wherein the performing, by a first terminal, a first operation based on target content comprises one of the following:
when at least one of the first measurement result and the second measurement result is greater than or equal to a third preset threshold, triggering, by the first terminal, the relay selection or the relay reselection; and
when both the first measurement result and the second measurement result are greater than or equal to a fourth preset threshold, triggering, by the first terminal, the relay selection or the relay reselection.

17. The method according to claim 1, wherein the performing, by a first terminal, a first operation based on target content comprises one of the following:
when at least one of the first measurement result and the second measurement result is less than or equal to a fifth preset threshold, triggering, by the first terminal, the relay selection or the relay reselection; and
when both the first measurement result and the second measurement result are less than or equal to a sixth preset threshold, triggering, by the first terminal, the relay selection or the relay reselection.

18. A relay processing apparatus, applied to a first terminal, and comprising:
an execution module, configured to perform a first operation based on target content, wherein
the first operation is to trigger relay selection or relay reselection based on at least one of a first measurement result of a reference signal corresponding to a sidelink discovery message and a second measurement result of a reference signal corresponding to sidelink data; and
the target content comprises at least one of the following: whether a PC5 connection has been established between the first terminal and a relay terminal, whether there is data transmission, whether there is an available reference signal measurement result corresponding to the sidelink discovery message, whether there is an available reference signal measurement result corresponding to the sidelink data, whether the discovery message is able to be received, first indication information of a network side device has been received, second indication information of a peer terminal has been received, a comparison result between the first measurement result and the second measurement result, a comparison result between the first measurement result and a first preset threshold, and a comparison result between the second measurement result and a second preset threshold.

19. The apparatus according to claim 18, wherein the execution module comprises one of the following:
a first trigger unit, configured to: in a case that the PC5 connection has been established between the first terminal and the relay terminal, trigger the relay selection or the relay reselection based on the second measurement result; and
a second trigger unit, configured to: in a case that the PC5 connection has been established between the first terminal and the relay terminal, trigger the relay selection or the relay reselection based on the first measurement result and the second measurement result.

20. The apparatus according to claim 19, wherein in a case that the PC5 connection has been established between the first terminal and the relay terminal, and there is no service data transmission, the apparatus comprises one of the following:
a first stopping module, configured to stop evaluation for the relay selection or the relay reselection; and
a receiving module, configured to receive a data packet sent by the relay terminal, wherein the data packet is used for the first terminal to measure the reference signal corresponding to the sidelink data.

21. The apparatus according to claim 18, wherein the execution module comprises at least one of the following:
a third trigger unit, configured to: when there is data transmission, trigger the relay selection or the relay reselection based on the second measurement result;
a fourth trigger unit, configured to: when there is data transmission, trigger the relay selection or the relay reselection based on the first measurement result and the second measurement result; and
a fifth trigger unit, configured to: when there is no data transmission, trigger the relay selection or the relay reselection based on the first measurement result.

22. The apparatus according to claim 21, wherein the discovery message is able to be transmitted in any one of following manners:
transmitting the discovery message between the first terminal and the relay terminal periodically; and
transmitting the discovery message only if there is no data.

23. The apparatus according to claim 18, wherein the execution module comprises:
a sixth trigger unit, configured to: when there is an available reference signal corresponding to the sidelink data, trigger the relay selection or the relay reselection based on the second measurement result; and
a seventh trigger unit, configured to: when there is no available reference signal corresponding to the sidelink data, trigger the relay selection or the relay reselection based on the first measurement result.

24. The apparatus according to claim 23, wherein the discovery message is able to be transmitted in any one of following manners:
transmitting the discovery message between the first terminal and the relay terminal periodically; and
when there is no available reference signal corresponding to the sidelink data, transmitting the discovery message.

25. The apparatus according to claim 18, wherein the execution module comprises:
an eighth trigger unit, configured to: when there is an available reference signal corresponding to the sidelink discovery message, trigger the relay selection or the relay reselection based on the first measurement result; and
a ninth trigger unit, configured to: when there is no available reference signal corresponding to the sidelink discovery message, trigger the relay selection or the relay reselection based on the second measurement result.

26. The apparatus according to claim 18, wherein the execution module comprises:
when the discovery message is received, triggering, by the first terminal, the relay selection or the relay reselection based on the first measurement result; and
when the discovery message is not received, triggering, by the first terminal, the relay selection or the relay reselection based on the second measurement result.

27. The apparatus according to claim 26, wherein the apparatus further comprises:
a second stopping module, configured to: when the reference signal corresponding to the discovery message and the reference signal corresponding to the data have not been received, stop evaluation for the relay selection or the relay reselection.

28. The apparatus according to claim 18, wherein the first indication information is used to indicate one of the following:
triggering the relay selection or the relay reselection based on the first measurement result, or triggering the relay selection or the relay reselection based on the second measurement result; and
triggering the relay selection or the relay reselection based on the first measurement result, or triggering the relay selection or the relay reselection based on the second measurement result and the first measurement result.

29. The apparatus according to claim 18, wherein the first indication information is in a correspondence with at least one of the following:
a pair of source ID and destination ID, a destination ID, a unicast link ID, a terminal, a service type, and a group ID in multicast.

30. The apparatus according to claim 18, wherein the second indication information is used to indicate one of the following:
triggering the relay selection or the relay reselection based on the first measurement result, or triggering the relay selection or the relay reselection based on the second measurement result; and
triggering the relay selection or the relay reselection based on the first measurement result, or triggering the relay selection or the relay reselection based on the first measurement result and the second measurement result.

31. The apparatus according to claim 18, wherein the execution module comprises one of the following:
a tenth trigger unit, configured to: when the first measurement result is greater than or equal to the first preset threshold, and the second measurement result is less than the second preset threshold, trigger the relay selection or the relay reselection based on the first measurement result;
an eleventh trigger unit, configured to: when the first measurement result is less than the first preset threshold, and the second measurement result is greater than or equal to the second preset threshold, trigger the relay selection or the relay reselection based on the second measurement result; and
a twelfth trigger unit, configured to: when the first measurement result is greater than or equal to the first preset threshold, and the second measurement result is greater than or equal to the second preset threshold, trigger the relay selection or the relay reselection.

32. The apparatus according to claim 18, wherein the execution module comprises at least one of the following:
a thirteenth trigger unit, configured to: when the first measurement result is greater than or equal to the second measurement result, trigger the relay selection or the relay reselection based on the second measurement result;
a fourteenth trigger unit, configured to: when the first measurement result is less than the second measurement result, trigger the relay selection or the relay reselection based on the first measurement result;
a fifteenth trigger unit, configured to: when the first measurement result is less than or equal to the second measurement result, trigger the relay selection or the relay reselection based on the second measurement result; and
a sixteenth trigger unit, configured to: when the first measurement result is greater than the second measurement result, trigger the relay selection or the relay reselection based on the first measurement result.

33. The apparatus according to claim 18, wherein the execution module comprises one of the following:
a seventeenth trigger unit, configured to: when at least one of the first measurement result and the second measurement result is greater than or equal to a third preset threshold, trigger the relay selection or the relay reselection; and
an eighteenth trigger unit, configured to: when both the first measurement result and the second measurement result are greater than or equal to a fourth preset threshold, trigger the relay selection or the relay reselection.

34. The apparatus according to claim 18, wherein the execution module comprises one of the following:
a nineteenth trigger unit, configured to: when at least one of the first measurement result and the second measurement result is less than or equal to a fifth preset threshold, trigger the relay selection or the relay reselection; and
a twentieth trigger unit, configured to: when both the first measurement result and the second measurement result are less than or equal to a sixth preset threshold, trigger the relay selection or the relay reselection.

35. A terminal, comprising a processor, a memory, and a program or an instruction stored in the memory and executable on the processor, wherein when the program or the instruction is executed by the processor, steps of the method according to any one of claims 1 to 17 are implemented.

36. A readable storage medium, wherein the readable storage medium stores a program or an instruction, and when the program or the instruction is executed by a processor, steps of the method according to any one of claims 1 to 17 are implemented.

37. A chip, comprising a processor and a communications interface, wherein the communications interface is coupled to the processor, and the processor is configured to run a program or an instruction, to implement steps of the method according to any one of claims 1 to 17.

38. A computer program product, wherein the computer program product is stored in a non-volatile storage medium, and the computer program product is executed by at least one processor to implement steps of the method according to any one of claims 1 to 17.
